# EUROPEAN PATENT APPLICATION

(11) **EP 3 848 610 A1**
(43) Date of publication of application: **14.07.2021**
(21) Application number: 20151487.4
(22) Date of filing: 13.01.2020
(51) Int. Cl.: F16F 9/06, F16F 9/36

(54) **A SHOCK ABSORBER WITH GAS SPRING AND NO GAS-TO-GAS SEALS**

(71) Applicant: Öhlins Racing AB, 194 27 Upplands Väsby (SE)
(72) Inventor: ANDERSSON, Pontus, 175 50 Järfälla (SE)
(74) Representative: AWA Sweden AB

(57) **Abstract**

A shock absorber (1) comprising a liquid damper and a gas spring, wherein the shock absorber is designed such that there are no gas-to-gas seals in the shock absorber, by having a piston (6) provided with first sealing means (18) sealingly engage an inner surface of an inner cylinder (3) and divide the inner cylinder (3) into a first volume (V1) for damping fluid and a second volume (V2) for gas. An inner end of the inner cylinder (3) is provided with a second sealing means (8) for sealing against an inner surface of the outer cylinder (2), wherein an inner end of the outer cylinder (2) is provided with a third sealing means (9) for sealing against an outer surface of the inner cylinder (3) such that an outer enclosed volume (V4) is formed between the second sealing means (8) and the third sealing means (9). T he piston (6) is attached to the outer end of the outer cylinder (2) by means of a piston rod (7) which is hollow and fluidly connects the first volume (V1) to the outer enclosed volume (V4) via a fluid passage (10) between the piston rod (7) and the outer enclosed volume (V4).

## Description

### Technical field

The present disclosure relates to shock absorbers for vehicles, such as motorcycles or mountain bikes. Specifically, the present disclosure relates to a shock absorber comprising a gas spring.

### Background

Shock absorbers for vehicles such as motorcycles or mountain bikes are often fitted between moving parts of the vehicle suspension system. A common use of such shock absorbers is for controlling the movement of a rear swingarm of a mountain bike. The shock absorber may comprise a spring unit and a damping unit and the spring unit may come in the form of a coil spring or a gas spring.

Gas springs are advantageous in that they are tunable by adjustment of the gas pressure in the gas spring. However, gas springs require seals to be able to keep the gas pressure over time and seals wear and require maintenance. An example of a prior art shock absorber comprising a gas spring and a fluid damper is shown in US6311962A. A problem with this shock absorber is that the seals between the chambers of the gas spring and surrounding air require high precision manufacturing and may be subject to excessive wear and gas leaks if used in harsh conditions with lots of foreign particles, such as dust and dirt, reaching the seals and wearing seals and/or surfaces sealed against. Hence, the seals eventually fail to properly seal the gas chambers from outside air such that refill of gas and/or service is required.

Another prior art shock absorber is shown in US2011174582 AA. This shock absorber has a slightly different design but also faces the same challenges as the previously discussed shock absorber.

Accordingly, it would be advantageous to reduce the need of service and maintenance of shock absorbers comprising a gas spring.

### Summary

An object of the invention is to provide an improved shock absorber comprising a gas spring enabling reduced need of maintenance and service. According to a first aspect, this and other objects are achieved by a shock absorber according to the appended independent claim 1, with alternative embodiments defined in the dependent claims. The shock absorber comprises a telescopic leg comprising a first end and an opposite second end, wherein the telescopic leg comprises an outer cylinder and an inner cylinder movable back and forth within the outer cylinder between a compressed position and an extended position. The outer cylinder comprises an outer end portion at the first end of the telescopic leg. The inner cylinder comprises an outer end portion at the second end of the telescopic leg. The shock absorber further comprises a piston provided with first sealing means sealingly engaging an inner surface of the inner cylinder thereby dividing the inner cylinder into a first volume for damping fluid and a second volume for gas. The piston is attached to the outer end portion of the outer cylinder by means of a piston rod. An inner end portion of the inner cylinder is provided with a second sealing means for sealing against an inner surface of the outer cylinder, wherein an inner end portion of the outer cylinder is provided with a third sealing means for sealing against an outer surface of the inner cylinder such that an outer enclosed volume is formed between the second sealing means and the third sealing means. The piston rod is hollow and fluidly connects the first volume to the outer enclosed volume via a fluid passage between the piston rod and the outer enclosed volume. The first volume, the hollow piston, the fluid passage and the outer enclosed volume are all filled with damping fluid. The second volume is filled with gas such as air. Upon compression of the shock absorber, the piston forces damping fluid from the first volume, through the hollow piston rod and further through the fluid passage to the outer enclosed volume. As the first volume decreases, so does the volume for gas inside the outer cylinder, wherein gas pressure in the outer cylinder increases such that the inner cylinder is biased towards its extended position with increasing force as compression of the shock absorber progresses. The gas volume in the shock absorber effectively operates as a gas spring. Also, the second sealing means always has damping oil on the side of second sealing means facing the outer enclosed volume. Hence, the second sealing means is lubricated by the damping fluid wherein sealing performance and longevity of the sealing means is improved and air/gas leakage is mitigated. The provision of the outer enclosed volume filled with damping fluid thus ensures that gas pressure inside the second (or third) volumes is always separated from air surrounding the shock absorber by a wet seal. Similarly, the first sealing means at the piston is also lubricated by the damping fluid on one side of the piston. Hence, the present shock absorber design enables use of a gas spring in a shock absorber whilst avoiding any gas-to-gas seals.

The inner end portion of the inner cylinder may be provided with fourth sealing means configured to seal against an outer surface of the hollow piston rod thereby separating the second volume for gas from a third volume for gas inside the outer cylinder. The fourth sealing means divides the inner volume of the outer cylinder into the second volume thus acting as a negative chamber of the gas spring, and a third volume thus acting as a positive chamber of the gas spring. Since the fourth sealing means seals to the piston rod, a higher compression ratio of gas in the third volume is enabled at compression of the shock absorber. Also, the fourth sealing means provides a larger effective area for the gas in the third volume of the gas spring to act on for biasing the inner cylinder towards its extended position, thus increasing biasing force from the gas at a given pressure.

The outer surface of the hollow piston rod may be provided with a bypass recess configured to allow fluid communication past the fourth sealing means between the second volume for gas and the third volume for gas when the inner cylinder is positioned in a third position a predetermined distance from its extended position. The bypass recess enables pressure equalization between the second gas volume and the third gas volume. Hence, further movement of the inner cylinder towards its extended position causes the pressure in the second gas volume to increase whilst the pressure in the third gas volume decreases.

The outer cylinder and the inner cylinder may be configured such that the cross-sectional area of the outer enclosed volume in a first plane normal to the longitudinal axis of the shock absorber equals the cross-sectional area of the first volume in a second plane normal to the longitudinal axis of the shock absorber. At compression of the shock absorber, the amount of fluid forced out of the first volume corresponds to the volume increase of the outer enclosed volume such that there is no need of an extra volume for handling excess damping fluid at compression of the shock absorber.

The inner cylinder and the outer cylinder may be sized such that the volume change of the outer enclosed volume at displacement of the inner cylinder with respect to the outer cylinder along the longitudinal axis corresponds to the volume change of the first volume. At compression of the shock absorber, the amount of fluid forced out of the first volume corresponds to the volume increase of the outer enclosed volume such that there is no need of an extra volume for handling excess damping fluid at compression of the shock absorber.

The outer cylinder may comprise two concentric cylindrical walls together defining an intermediate volume, wherein the fluid passage comprises the intermediate volume.

The fluid passage may comprise a conduit extending outside the outer cylinder from the outer end portion of the outer cylinder to the outer enclosed volume. The provision of such a conduit provides simplified the design of the rest of the shock absorber by moving the fluid passage to an external component in the form of a conduit such as a pipe or hose extending along the shock absorber, thereby reducing the need of internal channels.

The shock absorber may further comprise a valve assembly provided at the outer end portion of the outer cylinder for controlling fluid flow through the fluid passage between the hollow piston rod and the outer enclosed volume. The hollow piston rod routes the damping fluid between the first volume and the valve assembly where the valve assembly controls fluid flows. The provision of the valve assembly at the outer end position of the outer cylinder makes the valves easily accessible from an end of the shock absorber, thereby enabling reduced complexity of the shock absorber.

The valve assembly may comprise a first fluid path comprising a first directional valve configured to move to an open position upon fluid flow from the hollow piston rod to the outer enclosed volume and to move to a restricting position upon fluid flow from the outer enclosed volume to the hollow piston rod. Also, the valve assembly may comprise a second fluid path comprising a second directional valve configured to move to a restricting position upon a fluid flow from the hollow piston rod to the outer enclosed volume and to move to an open position upon fluid flow from the outer enclosed volume to the hollow piston rod. The combination of two fluid paths, each one with a respective directional valve configured to act in opposite direction to the other, enables improved control of compression and rebound movements of the shock absorber.

The first directional valve may be adjustable to control its throttling behavior at its open position. The first directional valve thus controls a compression flow of damping fluid in the damper at compression of the damper from an extended position to a compressed position.

The second directional valve may be adjustable to control its throttling behavior at its open position. The second directional valve thus controls a rebound flow of damping fluid in the damper at extension of the damper from an extended position to a compressed position.

The shock absorber may further comprise a third fluid path fluidly connecting the second volume or the third volume to the outside of the shock absorber, wherein a check valve, such as a Schraeder valve, is provided in the third fluid path. The third fluid passage enables control of gas pressure within the second volume and/or third volume such that the gas spring function of the shock absorber can easily be adjusted by introduction or removal of gas through the third fluid passage. The check valve ensures that gas cannot inadvertently leave the outer cylinder and still enables easy refill of gas through the check valve.

The shock absorber may comprise an end cap attached at the outer end portion of the outer cylinder by means of a circumferential flange of the end cap engaging a corresponding thread of an external surface of the outer cylinder. The end cap provides a removable means to close the outer cylinder and thereby enables a less complicated design of the outer cylinder of the shock absorber. By placing the threads on the external surface of the outer cylinder, the flange is also on the outside of the outer cylinder such that the flange does not limit the stroke length of the inner cylinder within the outer cylinder.

The piston rod may be removably attached to the end cap. This allows easier assembly and disassembly of the shock absorber.

The end cap may comprise the valve assembly. This provides a compact design with few parts.

A second aspect relates to a vehicle comprising a shock absorber according to the first aspect above, such as a motorcycle or a mountain bike.

### Brief description of drawings

Fig. 1 is a cross-sectional view of a shock absorber according to a first embodiment with some features schematically illustrated.
Figs. 2 and 3 are enlarged detail views of details of the shock absorber also shown in Fig. 1.

| | | | |
|---|---|---|---|
| 1 | shock absorber | 16 | second fluid path |
| 2 | outer cylinder | 17 | second directional valve |
| 3 | inner cylinder | 18 | first sealing means |
| 4 | end cap | P1 | compressed position |
| 5 | check valve | P2 | extended position |
| 6 | piston | P3 | third position |
| 7 | piston rod | A | longitudinal axis of shock absorber |
| 8 | second sealing means | D | predetermined distance from extended position |
| 9 | third sealing means | PL1 | first plane |
| 10 | fluid passage | PL2 | second plane |
| 11 | fourth sealing means | V1 | first volume (for liquid) |
| 12 | bypass recess | V2 | second volume (for gas) |
| 13 | valve assembly | V3 | third volume (for gas) |
| 14 | first fluid path | V4 | outer enclosed volume |
| 15 | first directional valve | | |

### Detailed description

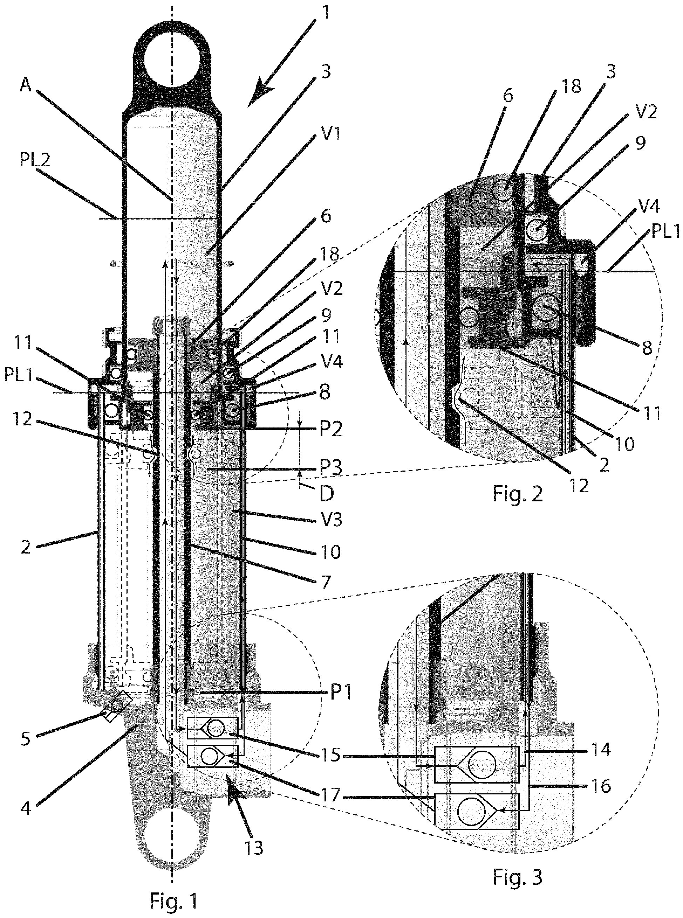

A shock absorber 1 according to a first embodiment will hereinafter be described with reference to the appended drawings. The shock absorber 1 is for use with a rear wheel suspension of a motorcycle although the shock absorber may alternatively be used in a vehicle suspension of any vehicle, such as a mountain bike. The shock absorber 1 comprises a telescopic leg comprising a first end and an opposite second end. The telescopic leg comprises an outer cylinder 2 and an inner cylinder 3 movable back and forth within the outer cylinder 2 between a compressed position P1 and an extended position P2. As shown in the lower portion of fig. 1, the outer cylinder 2 comprises an outer end portion at the first end of the telescopic leg. As shown in the upper portion of fig. 1, the inner cylinder 3 comprises an outer end portion at the second end of the telescopic leg. The outer end portion of each cylinder is provided with an attachment means for attachment of the respective end of the shock absorber to the frame and to the swingarm respectively of the motorcycle. In this embodiment the attachment means has the form of an ear with a through hole for receiving a shaft or bolt, but in other embodiments the attachment means could alternatively have any other suitable design.
The shock absorber 1 comprises a piston 6 provided with first sealing means 18 sealingly engaging an inner surface of the inner cylinder 3 thereby dividing the inner cylinder 3 into a first volume V1 for damping fluid and a second volume V2 for gas. The first sealing means is provided in the form of a circumferential outer recess on the piston and an O-ring or other suitable sealing member in said circumferential recess for sealing against the inner surface of the inner cylinder. However, the first sealing means could in other embodiments alternatively have any other suitable design such as a separate ring attached to the piston, said ring being provided with a suitable sealing member.
The piston 6 is attached to the outer end portion of the outer cylinder 2 by means of a piston rod 7. The piston rod extends through a central hole of the piston and sealingly engages the piston such that no fluid can pass between the piston rod and the piston.
As shown in fig. 2, an inner end portion of the inner cylinder 3 is provided with a second sealing means 8 for sealing against an inner surface of the outer cylinder 2. The second sealing means 8 comprises an O-ring provided in an outer recess on the inner cylinder 3 for sealing between the inner cylinder 3 and the inner surface of the outer cylinder 2. However, the second sealing means 8 could alternatively be formed as a separate ring attached to the inner cylinder or have any other suitable design. Also, an inner end portion of the outer cylinder 2 is provided with a third sealing means 9 for sealing against an outer surface of the inner cylinder 3 such that an outer enclosed volume V4 is formed between the second sealing means 8 and the third sealing means 9. The third sealing means 9 comprises a ring threadedly engaging the outer cylinder 2, and an O-ring provided in an inner recess on the ring for sealing between the ring and the outer surface of the inner cylinder 3. However, the third sealing means 9 could alternatively be formed integrally with the outer cylinder 2 or have any other suitable design.
The piston rod 7 is hollow and fluidly connects the first volume V1 to the outer enclosed volume V4 via a fluid passage 10 between the piston rod 7 and the outer enclosed volume V4. The fluid passage/connection between the hollow piston rod and the outer enclosed volume V4 may be provided in any suitable form, such as a conduit, a hose or an internal passage formed in a wall of the outer cylinder.

An inner end portion of the inner cylinder 3 is provided with a fourth sealing means 11 configured to seal against an outer surface of the hollow piston rod 7 thereby separating the second volume V2 for gas from a third volume V3 for gas inside the outer cylinder 2. The fourth sealing means 11 comprises a ring threadedly engaging the inner cylinder, and an O-ring provided in an inner recess on the ring for sealing between the ring and the outer surface of the piston rod 7. However, the fourth sealing means 11 could alternatively in other embodiments be formed integrally with the inner cylinder 3 or have any other suitable design. The fourth sealing means 11 may alternatively in other embodiments be omitted, however leading to a lower possible compression and only a 'positive chamber' but no 'negative chamber'. The positive chamber is the chamber in which pressure increases as compression of the gas spring progresses and the negative chamber is a chamber in which gas pressure decreases as compression of the gas spring progresses.

The outer surface of the hollow piston rod 7 is provided with a bypass recess 12 configured to allow fluid communication past the fourth sealing means 11 between the second volume V2 for gas V2 and the third volume V3 for gas when the inner cylinder 3 is positioned in a third position P3 a predetermined distance D from its extended position P2. The bypass recess 12 is optional and may in other embodiments alternatively be omitted.

The outer cylinder 2 and the inner cylinder 3 are configured such that the cross-sectional area of the outer enclosed volume V4 in a first plane PL1 normal to the longitudinal axis A of the shock absorber 1 equals the cross-sectional area of the first volume V1 in a second plane PL2 normal to the longitudinal axis A of the shock absorber 1. In other words, the inner cylinder 3 and the outer cylinder 2 are sized such that the volume change of the outer enclosed volume V4 at displacement of the inner cylinder 3 with respect to the outer cylinder 2 along the longitudinal axis A corresponds to the volume change of the first volume V1. However, in other embodiments, a compressible body or a separate chamber may be provided in connection with the damping fluid oil to handle any differences in volume between the increase/decrease of the first volume V1 and the simultaneous decrease/increase of the outer enclosed volume V4.

The outer cylinder 2 comprises two concentric cylindrical walls together defining an intermediate volume, wherein the fluid passage 10 comprises the intermediate volume. Such a cylinder design is commonly referred to as a twin-tube design or a TTX-design. The cylindrical walls may be manufactured separately as cylinders, or they may be manufactured in one piece by extrusion, however with cross-walls between the cylindrical walls.

The fluid passage 10 may in another embodiment alternatively instead of the TTX-design comprise a conduit, such as a pipe or hose, extending outside the outer cylinder 2 from the outer end portion of the outer cylinder 2 to the outer enclosed volume V4.

The shock absorber 1 further comprises a valve assembly 13 provided at the outer end portion of the outer cylinder 2 for controlling fluid flow through the fluid passage 10 between the hollow piston rod 7 and the outer enclosed volume V4. The valve assembly 13 comprises a first fluid path 14 comprising a first directional valve 15 configured to move to an open position upon fluid flow from the hollow piston rod 7 to the outer enclosed volume V4 and to move to a restricting position upon fluid flow from the outer enclosed volume V4 to the hollow piston rod 7. The valve assembly 13 also comprises a second fluid path 16 comprising a second directional valve 17 configured to move to a restricting position upon a fluid flow from the hollow piston rod 7 to the outer enclosed volume V4 and to move to an open position upon fluid flow from the outer enclosed volume V4 to the hollow piston rod 7. The first directional valve 15 is adjustable to control its throttling behavior at its open position. The first directional valve thus controls a compression flow of damping fluid in the damper at compression of the damper from an extended position to a compressed position. The second directional valve 17 is adjustable to control its throttling behavior at its open position. The second directional valve thus controls a rebound flow of damping fluid in the damper at extension of the damper from an extended position to a compressed position. In some embodiments, the first and second fluid paths may be provided as one fluid passage, wherein the first and second directional valves both control flows in the one fluid path. In other embodiments, one or more further fluid paths and valves may be provided to control fluid flows back and forth between the outer enclosed volume V4 and the hollow piston rod 7.

The shock absorber 13 further comprises a third fluid path schematically illustrated in fig. 1. The third fluid path fluidly connects the third volume V3 to the outside of the shock absorber 1, wherein a check valve 5, such as a Schraeder valve, is provided in the third fluid path thereby allowing control of the gas pressure inside the second and/or third volumes by pumping in more gas through the check valve 5 or by releasing gas through check valve 5. Adjustment of the gas pressure controls sag of the motorcycle suspension. In other embodiments, the third fluid passage could be provided somewhere else than in the end cap, such as through the wall(s) of the outer cylinder.

The shock absorber 1 comprises an end cap 4 attached at the outer end portion of the outer cylinder 2 by means of a circumferential flange of the end cap 4 engaging a corresponding thread of an external surface of the outer cylinder 2. The piston rod 7 is removably attached to the end cap 4 by means of corresponding threads. Also, the end cap 4 comprises/houses the valve assembly 13 and the previously discussed attachment means. In other embodiments, the valve assembly may alternatively be provided separately from the end cap and connected to the shock absorber by means of pipes or hoses or by screwing a valve assembly onto the end cap.

At full compression of the shock absorber, the inner cylinder has moved all the way into the outer cylinder to the compressed position P1, as indicated by dotted lines and the P1 reference numeral in fig. 1. During compression movement, fluid is forced by the piston to move from the first volume V1, through the hollow piston rod 7, through the valve assembly 13, further through the intermediate space of the twin tube outer cylinder 2 and into the outer enclosed volume V4. The valve assembly restricts fluid flow and thereby controls the movement of the shock absorber 1 to dampen its movement. During rebound movement, the inner cylinder 3 moves further out of the outer cylinder 2 towards an extended position P2 as indicated by dotted lines and the P2 reference numeral in fig. 1. As the inner cylinder 3 moves towards the extended position P2, the volume of the outer enclosed volume V4 decreases and damping fluid is forced from the outer enclosed volume V4, through the fluid passage 10 and the valve assembly 13, further into the hollow piston rod 7 and finally into the first volume V1. The increase of the first volume V1 corresponds to the decrease of the outer enclosed volume V4, and vice versa at compression.

Embodiments are defined in the following numbered clauses:
Clause 1. A shock absorber comprising a telescopic leg comprising a first end and an opposite second end, wherein the telescopic leg comprises an outer cylinder and an inner cylinder movable back and forth within the outer cylinder between a compressed position and an extended position,
   wherein the outer cylinder comprises an outer end portion at the first end of the telescopic leg and wherein the inner cylinder comprises an outer end portion at the second end of the telescopic leg,
   wherein the shock absorber comprises a piston provided with first sealing means sealingly engaging an inner surface of the inner cylinder thereby dividing the inner cylinder into a first volume for damping fluid and a second volume for gas,
   wherein the piston is attached to the outer end portion of the outer cylinder by means of a piston rod,
   wherein an inner end portion of the inner cylinder is provided with a second sealing means for sealing against an inner surface of the outer cylinder,
   wherein an inner end portion of the outer cylinder is provided with a third sealing means for sealing against an outer surface of the inner cylinder such that an outer enclosed volume is formed between the second sealing means and the third sealing means, and
   wherein the piston rod is hollow and fluidly connects the first volume to the outer enclosed volume via a fluid passage between the piston rod and the outer enclosed volume.
Clause 2. A shock absorber according to clause 1, wherein an inner end portion of the inner cylinder is provided with fourth sealing means configured to seal against an outer surface of the hollow piston rod thereby separating the second volume for gas from a third volume for gas inside the outer cylinder.
Clause 3. A shock absorber according to clause 2, wherein the outer surface of the hollow piston rod is provided with a bypass recess configured to allow fluid communication past the fourth sealing means between the second volume for gas and the third volume for gas when the inner cylinder is positioned in a third position a predetermined distance from its extended position.
Clause 4. A shock absorber according to clause 1, wherein the outer cylinder and the inner cylinder are configured such that the cross-sectional area of the outer enclosed volume in a first plane normal to the longitudinal axis of the shock absorber equals the cross-sectional area of the first volume in a second plane normal to the longitudinal axis of the shock absorber.
Clause 5. A shock absorber according to clause 1, wherein the inner cylinder and the outer cylinder are sized such that the volume change of the outer enclosed volume at displacement of the inner cylinder with respect to the outer cylinder along the longitudinal axis corresponds to the volume change of the first volume.
Clause 6. A shock absorber according to clause 1, wherein the outer cylinder comprises two concentric cylindrical walls together defining an intermediate volume, wherein the fluid passage comprises the intermediate volume.
Clause 7. A shock absorber according to clause 1, wherein the fluid passage comprises a conduit (embodiment not illustrated) extending outside the outer cylinder from the outer end portion of the outer cylinder to the outer enclosed volume.
Clause 8. A shock absorber according to clause 1, further comprising a valve assembly provided at the outer end portion of the outer cylinder for controlling fluid flow through the fluid passage between the hollow piston rod and the outer enclosed volume.
Clause 9. A shock absorber according to clause 8, wherein the valve assembly comprises a first fluid path comprising a first directional valve configured to move to an open position upon fluid flow from the hollow piston rod to the outer enclosed volume and to move to a restricting position upon fluid flow from the outer enclosed volume to the hollow piston rod, and wherein the valve assembly comprises a second fluid path comprising a second directional valve configured to move to a restricting position upon a fluid flow from the hollow piston rod to the outer enclosed volume and to move to an open position upon fluid flow from the outer enclosed volume to the hollow piston rod.
Clause 10. A shock absorber according to clause 9, wherein the first directional valve is adjustable to control its throttling behavior at its open position.
Clause 11. A shock absorber according to clause 10, wherein the second directional valve is adjustable to control its throttling behavior at its open position.
Clause 12. A shock absorber according to clause 1, further comprising a third fluid path fluidly connecting the second volume or the third volume to the outside of the shock absorber, wherein a check valve, such as a Schraeder valve, is provided in the third fluid path.
Clause 13. A shock absorber according to clause 1, wherein the shock absorber comprises an end cap attached at the outer end portion of the outer cylinder by means of a circumferential flange of the end cap engaging a corresponding thread of an external surface of the outer cylinder.
Clause 14. A shock absorber according to clause 13, wherein the piston rod is removably attached to the end cap.
Clause 15. A shock absorber according to clause 14, wherein the end cap comprises the valve assembly.
Clause 16. A shock absorber comprising a telescopic leg comprising a first end and an opposite second end, wherein the telescopic leg comprises an outer cylinder and an inner cylinder movable back and forth within the outer cylinder between a compressed position and an extended position,
   wherein the outer cylinder comprises an outer end portion at the first end of the telescopic leg and wherein the inner cylinder comprises an outer end portion at the second end of the telescopic leg,
   wherein the shock absorber comprises a piston provided with first sealing means sealingly engaging an inner surface of the inner cylinder thereby dividing the inner cylinder into a first volume for damping fluid and a second volume for gas,
   wherein the piston is attached to the outer end portion of the outer cylinder by means of a piston rod,
   wherein an inner end portion of the inner cylinder is provided with a second sealing means for sealing against an inner surface of the outer cylinder,
   wherein an inner end portion of the outer cylinder is provided with a third sealing means for sealing against an outer surface of the inner cylinder such that an outer enclosed volume is formed between the second sealing means and the third sealing means,
   wherein the piston rod is hollow and fluidly connects the first volume to the outer enclosed volume via a fluid passage between the piston rod and the outer enclosed volume,
   wherein an inner end portion of the inner cylinder is provided with fourth sealing means configured to seal against an outer surface of the hollow piston rod thereby separating the second volume for gas from a third volume for gas inside the outer cylinder,
   wherein the inner cylinder and the outer cylinder are sized such that the volume change of the outer enclosed volume at displacement of the inner cylinder with respect to the outer cylinder along the longitudinal axis corresponds to the volume change of the first volume,
   wherein the outer surface of the hollow piston rod is provided with a bypass recess configured to allow fluid communication past the fourth sealing means between the second volume for gas and the third volume for gas when the inner cylinder is positioned in a third position a predetermined distance from its extended position, and
   wherein the outer cylinder comprises two concentric cylindrical walls together defining an intermediate volume, wherein the fluid passage comprises the intermediate volume.
Clause 17. A shock absorber according to clause 16, wherein the valve assembly comprises a first fluid path comprising a first directional valve configured to move to an open position upon fluid flow from the hollow piston rod to the outer enclosed volume and to move to a restricting position upon fluid flow from the outer enclosed volume to the hollow piston rod, and wherein the valve assembly comprises a second fluid path comprising a second directional valve configured to move to a restricting position upon a fluid flow from the hollow piston rod to the outer enclosed volume and to move to an open position upon fluid flow from the outer enclosed volume to the hollow piston rod.
Clause 18. A shock absorber according to clause 17, wherein the first directional valve is adjustable to control its throttling behavior at its open position.
Clause 19. A shock absorber according to clause 18, wherein the second directional valve is adjustable to control its throttling behavior at its open position.
Clause 20. A shock absorber according to clause 19, wherein the shock absorber comprises an end cap attached at the outer end portion of the outer cylinder by means of a circumferential flange of the end cap engaging a corresponding thread of an external surface of the outer cylinder, wherein the piston rod is removably attached to the end cap, and
   wherein the end cap comprises the valve assembly.

## Claims

1. A shock absorber (1) comprising a telescopic leg comprising a first end and an opposite second end, wherein the telescopic leg comprises an outer cylinder (2) and an inner cylinder (3) movable back and forth within the outer cylinder (2) between a compressed position (P1) and an extended position (P2),
wherein the outer cylinder (2) comprises an outer end portion at the first end of the telescopic leg and wherein the inner cylinder (3) comprises an outer end portion at the second end of the telescopic leg,
wherein the shock absorber (1) comprises a piston (6) provided with first sealing means (18) sealingly engaging an inner surface of the inner cylinder (3) thereby dividing the inner cylinder (3) into a first volume (V1) for damping fluid and a second volume (V2) for gas,
wherein the piston (6) is attached to the outer end portion of the outer cylinder (2) by means of a piston rod (7),
**characterized in that**
an inner end portion of the inner cylinder (3) is provided with a second sealing means (8) for sealing against an inner surface of the outer cylinder (2),
wherein an inner end portion of the outer cylinder (2) is provided with a third sealing means (9) for sealing against an outer surface of the inner cylinder (3) such that an outer enclosed volume (V4) is formed between the second sealing means (8) and the third sealing means (9), and
wherein the piston rod (7) is hollow and fluidly connects the first volume (V1) to the outer enclosed volume (V4) via a fluid passage (10) between the piston rod (7) and the outer enclosed volume (V4).

2. A shock absorber (1) according to claim 1, wherein an inner end portion of the inner cylinder (3) is provided with fourth sealing means (11) configured to seal against an outer surface of the hollow piston rod (7) thereby separating the second volume (V2) for gas from a third volume (V3) for gas inside the outer cylinder (2).

3. A shock absorber according to claim 2, wherein the outer surface of the hollow piston rod (7) is provided with a bypass recess (12) configured to allow fluid communication past the fourth sealing means (11) between the second volume (V2) for gas (V2) and the third volume (V3) for gas when the inner cylinder (3) is positioned in a third position (P3) a predetermined distance (D) from its extended position (P2).

4. A shock absorber (1) according to any one of claims 1-3, wherein the outer cylinder (2) and the inner cylinder (3) are configured such that the cross-sectional area of the outer enclosed volume (V4) in a first plane (PL1) normal to the longitudinal axis (A) of the shock absorber (1) equals the cross-sectional area of the first volume (V1) in a second plane (PL2) normal to the longitudinal axis (A) of the shock absorber (1).

5. A shock absorber (1) according to any one of claims 1-3, wherein the inner cylinder (3) and the outer cylinder (2) are sized such that the volume change of the outer enclosed volume (V4) at displacement of the inner cylinder (3) with respect to the outer cylinder (2) along the longitudinal axis (A) corresponds to the volume change of the first volume (V1).

6. A shock absorber (1) according to any one of claims 1-5, wherein the outer cylinder (2) comprises two concentric cylindrical walls together defining an intermediate volume, wherein the fluid passage (10) comprises the intermediate volume.

7. A shock absorber (1) according to any one of claims 1-5, wherein the fluid passage (10) comprises a conduit (embodiment not illustrated) extending outside the outer cylinder (2) from the outer end portion of the outer cylinder (2) to the outer enclosed volume (V4).

8. A shock absorber (1) according to any one of claims 1-7, further comprising a valve assembly (13) provided at the outer end portion of the outer cylinder (2) for controlling fluid flow through the fluid passage (10) between the hollow piston rod (7) and the outer enclosed volume (V4).

9. A shock absorber (1) according to claim 8, wherein the valve assembly (13) comprises a first fluid path (14) comprising a first directional valve (15) configured to move to an open position upon fluid flow from the hollow piston rod (7) to the outer enclosed volume (V4) and to move to a restricting position upon fluid flow from the outer enclosed volume (V4) to the hollow piston rod (7), and
wherein the valve assembly (13) comprises a second fluid path (16) comprising a second directional valve (17) configured to move to a restricting position upon a fluid flow from the hollow piston rod (7) to the outer enclosed volume (V4) and to move to an open position upon fluid flow from the outer enclosed volume (V4) to the hollow piston rod (7).

10. A shock absorber (1) according to claim 9, wherein the first directional valve (15) is adjustable to control its throttling behavior at its open position.

11. A shock absorber (1) according to claim 9 or 10, wherein the second directional valve (17) is adjustable to control its throttling behavior at its open position.

12. A shock absorber (1) according to any one of claims 1-11, further comprising a third fluid path fluidly connecting the second volume (V2) or the third volume (V3) to the outside of the shock absorber (1), wherein a check valve (5), such as a Schraeder valve, is provided in the third fluid path.

13. A shock absorber (1) according to any one of claims 1-12, wherein the shock absorber (1) comprises an end cap (4) attached at the outer end portion of the outer cylinder (2) by means of a circumferential flange of the end cap (4) engaging a corresponding thread of an external surface of the outer cylinder (2).

14. A shock absorber (1) according to claim 13, wherein the piston rod (7) is removably attached to the end cap (4).

15. A shock absorber (1) according to claim 14, wherein the end cap (4) comprises the valve assembly (13).
